# DEMANDE DE BREVET EUROPEEN

(11) **EP 2 372 673 A1**
(43) Date de publication de la demande: **05.10.2011**
(21) Numéro de dépôt: 11159262.2
(22) Date de dépôt: 22.03.2011
(51) Int. Cl.: G09B 9/08

(54) **Procédé et dispositif de développement et de qualification de simulateurs d'entraînements au pilotage d'un aéronef et dispositif de simulation en résultant**

(30) Priorité: 30.03.2010 FR 1052336
(71) Demandeur: Airbus Operations, 31060 Toulouse (FR); Airbus, 31700 Blagnac (FR)
(72) Inventeur: Cloury, Emmanuel, 31700, DAUX (FR); Jaupitre, Arnaud, 31170, TOURNEFEUILLE (FR); Wheller, Katharyn, 31200, TOULOUSE (FR)
(74) Mandataire: Imbert de Tremiolles, Ghislain

(57) **Abrégé**

L'invention a notamment pour objet un procédé et un dispositif pour développer et qualifier une partie de la composante logicielle d'un simulateur d'entraînements au pilotage d'un véhicule. Des modules logiciels développés pour un simulateur d'études, modélisant le comportement d'une partie du véhicule, sont intégrés (400) avec une application logicielle de virtualisation pour former une machine virtuelle qui permet l'exécution de ces modules dans un environnement distinct de celui pour lequel ils ont été développés. Certifiée (405), la machine virtuelle peut être intégrée (435) avec d'autres modules logiciels dans le simulateur d'entraînements. Le simulateur d'entraînements peut alors être certifié (440) sans qu'il soit nécessaire de certifier sa partie liée à la machine virtuelle.

## Description

La présente invention concerne les simulateurs de vol pour entraîner les pilotes d'aéronefs et plus particulièrement un procédé et un dispositif de développement et de qualification de simulateurs d'entraînements au pilotage d'un aéronef ainsi que le dispositif de simulation en résultant.

De façon générique, un simulateur de vol est un environnement constitué d'un ensemble de dispositifs et d'applications logicielles capable de reproduire le comportement d'un aéronef. Il existe principalement deux types de simulateurs : les simulateurs d'études et les simulateurs d'entraînements.

Les simulateurs d'études sont principalement utilisés comme prototypes lors de la conception d'un nouvel aéronef pour évaluer et tester de nouveaux concepts, pour mettre au point les équipements de bord, notamment les différents calculateurs, pour préparer les premiers vols ainsi que pour étudier l'ergonomie du poste de pilotage et le facteur humain. Ces prototypes peuvent également être utilisés lors de l'exploitation des aéronefs pour étudier les modifications de certaines caractéristiques et/ou reconstituer des séquences ayant conduit à un incident.

Hormis les dispositifs d'interface avec le pilote, les simulateurs d'études peuvent être purement logiciels ou mettre en oeuvre des équipements réels de l'aéronef tel que des vérins de commande, les systèmes de communication et les systèmes électriques. Le niveau de complexité de la partie logicielle, généralement basée sur un ensemble de modules visant chacun à modéliser un aspect particulier de l'aéronef, varie souvent avec le niveau de développement de l'aéronef et la nature des simulations envisagées. Ainsi, à titre d'illustration, le module de calcul de la dynamique de l'aéronef peut, dans un premier temps, viser à modéliser simplement le comportement de l'aéronef, avant d'évoluer vers un modèle totalement conforme à l'aéronef.

Si les simulateurs d'entraînements sont, sur leurs principes, similaires aux simulateurs d'études, il existe néanmoins des différences liées notamment à leur destination. En effet, ces simulateurs sont essentiellement conçus pour permettre à des pilotes d'acquérir des connaissances particulières sur des aéronefs spécifiques. Ils sont généralement fabriqués par des sociétés indépendantes, différentes des constructeurs des aéronefs, qui les font évoluer tout au long de l'exploitation des aéronefs correspondants.

Les simulateurs d'entraînements sont principalement créés à partir de données ou de spécifications fournies par les constructeurs d'aéronefs, appelées *data package* en terminologie anglo-saxonne, qui définissent toutes les caractéristiques nécessaires d'un aéronef pour permettre de simuler son comportement.

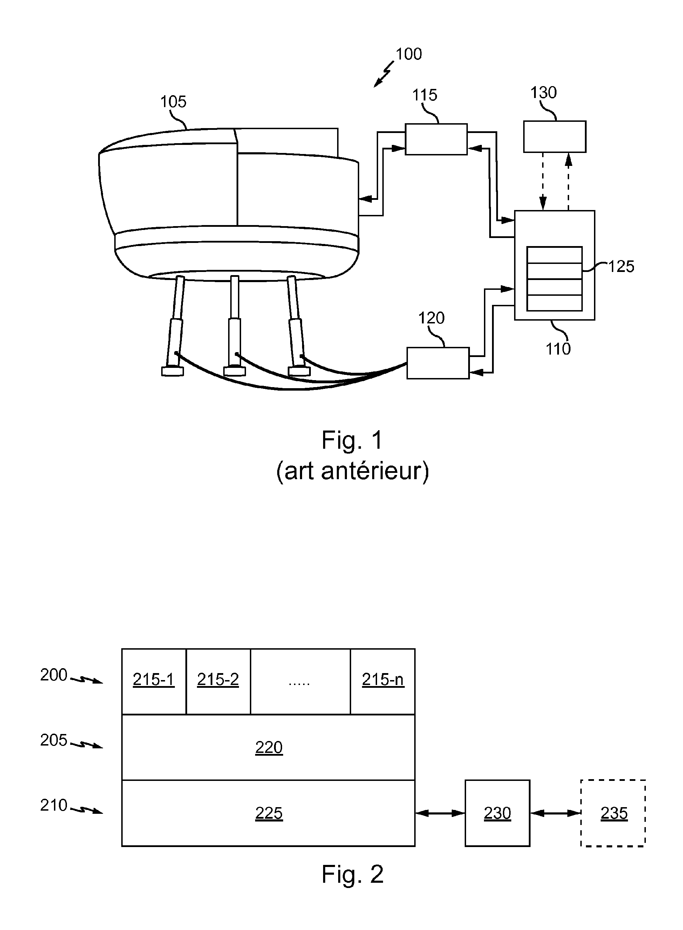

La figure 1 illustre schématiquement un simulateur d'études ou d'entraînements 100 comprenant notamment une reproduction de cockpit 105 montée sur un système de vérins pour reconstituer les forces auxquelles sont soumis les membres d'équipage en vol. L'intérieur de la reproduction du cockpit est aussi proche de la réalité que souhaité. Un écran de type panoramique, permettant une vision selon un angle d'environ 270°, est installé devant la reproduction du cockpit. Il permet l'affichage d'images, réelles ou de synthèse, contribuant à simuler l'environnement visuel du pilote.

La reproduction du cockpit 105 est connectée à un ensemble d'ordinateurs 110 mettant en oeuvre les algorithmes de modélisation et de simulation via les interfaces 115 et 120. L'interface 115 est ici une interface liée aux dispositifs d'affichage et de contrôle du cockpit, par exemple le manche, les palonniers et les contacteurs électriques, tandis que l'interface 120 est reliée aux mécanismes assurant les mouvements du cockpit.

L'ensemble d'ordinateurs 110 comprend les différents modules 125 mis en oeuvre dans la simulation, par exemple un modèle représentant la gestion et le comportement des moteurs et un modèle de détermination du comportement dynamique de l'aéronef.

Des composants réels des aéronefs tels que des actionneurs, des capteurs et/ou des calculateurs, référencés 130, peuvent être reliés à l'ensemble d'ordinateurs 110.

Pour des raisons évidentes de sécurité, les simulateurs d'entraînements sont qualifiés par des organismes officiels tels que la DGAC (sigle de Direction Générale de l'Aviation Civile).

Cependant, une telle qualification ne peut être obtenue que lorsque l'aéronef correspondant est certifié pour indiquer la parfaite adéquation entre les deux. Il existe donc une période non négligeable entre la certification de l'aéronef et la disponibilité des premiers simulateurs.

L'invention permet de résoudre au moins un des problèmes exposés précédemment.

L'invention a ainsi pour objet un procédé pour développer et qualifier au moins une partie de la composante logicielle d'un simulateur d'entraînements au pilotage d'un véhicule, ce procédé comprenant les étapes suivantes,
- intégration d'au moins un module logiciel développé pour un simulateur d'études, modélisant le comportement d'au moins une partie dudit véhicule, avec une application logicielle de virtualisation permettant l'exécution dudit au moins un module logiciel dans un environnement distinct de l'environnement d'exécution pour lequel ledit au moins un module a été développé, l'intégration dudit au moins un module logiciel avec ladite application logicielle de virtualisation formant une machine virtuelle ; et,
- certification de ladite machine virtuelle.

Le procédé selon l'invention permet ainsi de faciliter et d'accélérer le développement de simulateurs d'entraînements à partir de simulateurs d'études, sans contrainte forte liée aux environnements de développement des simulateurs d'études, assurant une certaine pérennité des simulateurs d'entraînements. Le procédé selon l'invention permet en outre de simplifier et d'accélérer les procédures de qualification des simulateurs d'entraînements en bénéficiant des procédures de certification des simulateurs d'études.

Selon un mode de réalisation particulier, ledit au moins un module logiciel comprend une modélisation du comportement dynamique dudit véhicule permettant de simuler au moins partiellement le comportement du véhicule.

L'invention a également pour objet un procédé pour développer et qualifier au moins une partie de la composante logicielle d'un simulateur d'entraînements au pilotage d'un véhicule, ce procédé comprenant les étapes suivantes,
- réception d'au moins une machine virtuelle certifiée formée selon le procédé décrit précédemment, ledit au moins un module logiciel de ladite machine virtuelle étant appelé premier module logiciel ;
- développement d'au moins un second module logiciel dudit simulateur d'entraînements, distinct dudit premier module logiciel ;
- intégration de ladite au moins une machine virtuelle et dudit au moins un second module logiciel ; et,
- qualification de ladite au moins une partie de la composante logicielle dudit simulateur d'entraînements.

Le procédé selon l'invention permet ainsi de combiner des modules issus de simulateurs d'études avec des modules développés spécifiquement pour des simulateurs d'entraînements afin de faciliter le développement de simulateurs d'entraînements et simplifier les procédures de qualification.

Selon un mode de réalisation particulier, le procédé comprend en outre une étape de réception de spécifications, ledit au moins un second module logiciel étant développé selon lesdites spécifications reçues, afin que ledit au moins un second module logiciel soit conforme à des spécifications dudit véhicule. Ledit au moins un second module logiciel est, par exemple, une modélisation d'au moins une partie dudit véhicule.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un dispositif comprenant des moyens adaptés à la mise en oeuvre de chacune des étapes du procédé décrit précédemment.

Les avantages procurés par ce programme d'ordinateur et ce dispositif sont similaires à ceux évoqués précédemment.

L'invention a aussi pour objet un dispositif pour simulateur d'entraînements au pilotage d'un véhicule, ce dispositif comprenant les moyens suivants,
- moyens de gestion logique adaptés à fournir un environnement d'exécution pour des applications logicielles ;
- premiers moyens logiciels de modélisation du comportement d'au moins une première partie dudit véhicule, lesdits premiers moyens de modélisation comprenant au moins une machine virtuelle comprenant elle-même au moins un premier module logiciel pour modéliser ledit comportement de ladite au moins une première partie dudit véhicule, l'environnement d'exécution desdits premiers moyens logiciels de modélisation correspondant audit environnement d'exécution pour des applications logicielles et l'environnement d'exécution dudit au moins un module logiciel étant différent dudit environnement d'exécution pour des applications logicielles ;
- seconds moyens logiciels comprenant au moins un second module logiciel adapté à former une interface entre ledit simulateur d'entraînements et un utilisateur ou à modéliser le comportement d'au moins une seconde partie dudit véhicule, l'environnement d'exécution dudit au moins un second module logiciel correspondant audit environnement d'exécution pour des applications logicielles.

Le dispositif selon l'invention permet ainsi de mettre en oeuvre des simulateurs d'entraînements créés à partir de modules spécifiques aux simulateurs d'entraînements et de modules de simulateurs d'études, sans contrainte forte liée aux environnements de développement des simulateurs d'études, assurant une certaine pérennité des simulateurs d'entraînements.

Selon un mode de réalisation particulier, lesdits moyens logiciels de modélisation comprennent des moyens logiciels de modélisation du comportement dynamique dudit véhicule.

De façon avantageuse, le dispositif comprend en outre des moyens de calcul et de mémorisation adaptés à mettre en oeuvre lesdits moyens de gestion logique.

D'autres avantages, buts et caractéristiques de la présente invention ressortent de la description détaillée qui suit, faite à titre d'exemple non limitatif, au regard des dessins annexés dans lesquels :
- la figure 1 illustre schématiquement un simulateur d'études ou d'entraînements ;
- la figure 2 illustre schématiquement un exemple d'architecture d'un simulateur d'études ;
- la figure 3 illustre schématiquement un exemple d'architecture d'un simulateur d'entraînements conforme à l'invention ;
- la figure 4 représente schématiquement un exemple d'algorithme pouvant être utilisé pour le développement de simulateurs d'entraînements ; et,
- la figure 5 illustre un exemple de dispositif adapté à mettre en oeuvre l'invention ou une partie de l'invention.

Afin de gagner du temps sur le processus de certification d'un aéronef, les constructeurs peuvent obtenir des certifications sur des composants ou des ensembles de composants logiciels utilisés dans les simulateurs d'études, les parties correspondantes de l'aéronef étant alors certifiées à travers la partie logicielle correspondante du simulateur.

Cependant, en raison de la sensibilité des données contenues dans les composants logiciels utilisés dans les simulateurs d'études, les constructeurs d'aéronefs ne veulent pas transférer de parties logicielles certifiées aux fabricants de simulateurs d'entraînements. Il n'est donc pas possible d'effectuer une migration de certaines parties logicielles d'un simulateur d'études vers un simulateur d'entraînements.

Il convient de rappeler ici que les contraintes de développement des modules logiciels modélisant au moins une partie d'un aéronef et utilisés dans les simulateurs d'études et d'entraînements sont différentes, notamment en raison des objectifs visés et des cycles d'exploitation. Une différence significative est ainsi liée aux systèmes sur lesquels fonctionnent les simulateurs et plus particulièrement aux systèmes d'exploitation mis en oeuvre.

Ainsi, afin de limiter la période nécessaire à la qualification d'un simulateur d'entraînements sans révéler le savoir-faire du constructeur d'aéronef, l'invention vise le portage de modules logiciels certifiés des simulateurs d'études vers les simulateurs d'entraînements.

La figure 2 illustre schématiquement un exemple d'architecture d'un simulateur d'études comprenant ici trois couches, une couche applicative 200, une couche de gestion logique 220 et une couche matérielle 210.

La couche applicative est ici constituée de différents modules logiciels référencés 215-1 à 215-n. Les modules logiciels mis en oeuvre sont par exemple un module de détermination du comportement dynamique de l'aéronef, un module de détermination du comportement de son système hydraulique et un module de détermination du comportement des commandes de vols. D'autres modules peuvent être mis en oeuvre. Les modules peuvent également être changés selon la précision de la modélisation souhaitée.

Les modules logiciels représentent ici du code exécutable dont le code source correspondant est, par exemple, du code C. Chaque code exécutable est destiné à un environnement d'exécution spécifique.

Les modules logiciels sont mis en oeuvre à l'aide d'une plateforme matérielle représentée par la couche matérielle 210. Celle-ci peut être constituée d'un ou de plusieurs ordinateurs ou serveurs connectés les uns au autres à travers un réseau de communication tel qu'un réseau ethernet. La couche matérielle peut également comprendre des dispositifs spécifiques pour permettre, notamment, un traitement en temps réel. De plus, la couche matérielle peut également comprendre des périphériques d'extension, notés 230, par exemple des cartes d'entrée/sortie, pour permettre de relier des composants réels d'un aéronef, référencés 235, à l'environnement de simulation.

Les couches applicative et matérielle sont reliées par une couche de gestion logique 205 comprenant un ou plusieurs systèmes d'exploitation référencés 220. Les modules mis en oeuvre dans la couche applicative sont spécifiques à la couche de gestion logique, c'est-à-dire au système d'exploitation 220.

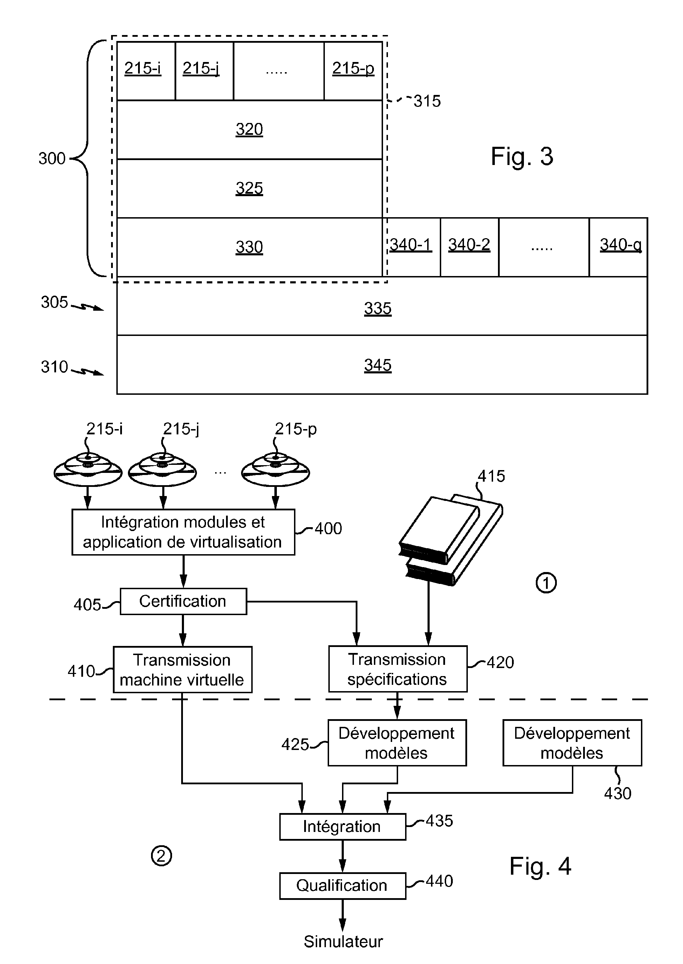

La figure 3 illustre schématiquement un exemple d'architecture d'un simulateur d'entraînements conforme à l'invention.

Comme le simulateur d'études illustré sur la figure 2, le simulateur d'entraînements comprend ici trois couches, une couche applicative 300, une couche de gestion logique 320 et une couche matérielle 310.

La couche applicative comprend une machine virtuelle 315, de préférence fournie par un constructeur d'aéronefs. La machine virtuelle est un système logiciel intégré comprenant des modules logiciels de simulation développés par le constructeur de l'aéronef, par exemple les modules 215-i à 215-p. Comme indiqué précédemment, ces modules peuvent notamment correspondre à la modélisation du comportement dynamique de l'aéronef, de son système hydraulique et des commandes de vol.

La machine virtuelle 315 comprend également un ou plusieurs systèmes d'exploitation 320, compatibles avec les modules 215-i à 215-p.

La machine virtuelle 315 comprend en outre une application logicielle de virtualisation 330 adaptée à simuler une couche matérielle 325 compatible avec le ou les systèmes d'exploitation 320 et ainsi avec les modules 215-i à 215-p.

L'application logicielle de virtualisation 330 est choisie en fonction du ou des systèmes d'exploitation 320 ainsi qu'en fonction du ou des systèmes d'exploitation 335 mis en oeuvre dans la couche de gestion logique 305. A titre d'illustration, l'application logicielle de virtualisation 330 permet de mettre en oeuvre le système d'exploitation Windows (Windows est une marque) sur le système d'exploitation Unix (Unix est une marque). Un tel logiciel de virtualisation est, par exemple, fourni par la société VMware (VMware est une marque).

Par ailleurs, la couche applicative 300 comprend les modules logiciels 340-1 à 340-q développés par le fabricant de simulateurs. A titre d'illustration, ces modules peuvent être des modules d'interface homme machine, permettant à un instructeur de créer des situations de pilotage particulières.

De façon similaire à la couche matérielle 210 du simulateur d'études illustré sur la figure 2, la couche matérielle 310 du simulateur d'entraînements peut comprendre un ou plusieurs ordinateurs ou serveurs connectés les uns au autres à travers un réseau de communication tel qu'un réseau Ethernet. De même, la couche matérielle peut également comprendre des dispositifs spécifiques pour permettre, notamment, un traitement en temps réel ainsi que des périphériques d'extension (non représentés) permettant de relier des composants réels de l'aéronef (non représentés) à l'environnement de simulation.

Selon un mode de réalisation particulier, la machine virtuelle 315 est fournie qualifiée par le constructeur de l'aéronef avec un ensemble de spécifications liées aux contraintes devant être respectées vis-à-vis de la certification. Ces contraintes sont notamment liées aux capacités de la couche matérielle 345.

Ainsi, la certification du simulateur d'entraînements peut être obtenue très rapidement, les modules liés aux caractéristiques intrinsèques de l'aéronef étant préalablement intégrés et certifiés. En d'autres termes, le constructeur d'avion fournit au fabricant de simulateurs un ensemble logiciel complet et certifié de simulation de l'aéronef, le fabricant n'ayant qu'à développer les modules logiciels connexes.

De plus, en changeant l'application logicielle de virtualisation pour adapter la machine virtuelle à de nouveaux systèmes d'exploitation ou à de nouvelles versions de ceux-ci, le constructeur d'aéronefs peut la faire évoluer sans frais de développement supplémentaires et sans révéler le contenu des modules de simulation.

La figure 4 représente schématiquement un exemple d'algorithme pouvant être utilisé pour le développement de simulateurs d'entraînements. La référence ① désigne ici les étapes mises en oeuvre par le constructeur d'aéronefs tandis que la référence ② désigne les étapes mises en oeuvre par le fabricant de simulateurs d'entraînements.

Comme indiqué précédemment en référence à la figure 3, le constructeur d'aéronefs génère une machine virtuelle pouvant être utilisée directement par le fabricant de simulateurs. A ces fins, le constructeur intègre les modules logiciels 215-i à 215-p développés pour le simulateur d'études et devant être mis en oeuvre dans le simulateur d'entraînements avec l'application logicielle de virtualisation (étape 400). A nouveau, l'application logicielle de virtualisation est déterminée en fonction des modules 215-i à 215-p et du ou des systèmes d'exploitation mis en oeuvre dans le simulateur d'entraînements. La machine virtuelle obtenue est ensuite certifiée (étape 405) et transmise au fabricant de simulateurs (étape 410).

De façon parallèle, le constructeur d'aéronef adresse au fabricant de simulateurs les spécifications de certification de la machine virtuelle, par exemple la configuration matérielle minimale requise, ainsi que des spécifications de l'aéronef référencées 415 permettant au fabricant de simulateurs de développer les modèles dont il a besoin, ne faisant pas partie de la machine virtuelle (étape 420). A titre d'illustration, de telles spécifications peuvent concerner la modélisation des moteurs de l'aéronef.

Le fabricant de simulateurs est alors en mesure de développer les modèles de simulation dont il a besoin (étape 425). Parallèlement, avant ou après, le fabricant développe les modèles dont il a besoin, qui ne sont pas directement liés à l'aéronef (étape 430), par exemple des modèles d'entraînement permettant à un instructeur de contrôler certaines phases de simulation. Alternativement ou de façon complémentaire, le fabricant peut réutiliser des modèles développés précédemment, ces modèles pouvant avoir été développés par lui-même ou par un tiers.

La machine virtuelle est alors intégrée avec les autres modèles (étape 435) pour former le simulateur qui peut ensuite être qualifié (étape 440) sans qu'il soit nécessaire de re-qualifié toute la partie liée à la machine virtuelle.

De façon similaire, le simulateur peut être basé sur une pluralité de machines virtuelles issues de différents constructeurs. Ainsi, il est possible d'intégrer une machine virtuelle visant essentiellement à modéliser le comportement dynamique d'un aéronef avec une machine virtuelle visant la modélisation des moteurs de cet aéronef.

Il convient de remarquer ici que les modèles sur lesquels sont basées les machines virtuelles peuvent ne pas être compatibles entre eux en raison des systèmes d'exploitation utilisés, la compatibilité résultant alors des applications logicielles de virtualisation utilisées.

Un élément de simulateur d'entraînement au pilotage d'un véhicule (par exemple un aéronef) peut donc comporter au moins un premier module logiciel de modélisation d'un comportement matériel d'au moins une partie dudit véhicule.

Par exemple, le premier module logiciel est un module de modélisation du comportement dynamique du véhicule, un module de modélisation d'un système hydraulique du véhicule, un module de modélisation de commandes du véhicule, ou autre.

L'élément de simulateur peut par ailleurs comporter une machine virtuelle pour exécuter ce premier module.

Ainsi, il est possible d'exécuter sur le simulateur des modules logiciels développés par le constructeur du véhicule lors de la phase de conception du véhicule. Par exemple, ces modules sont des modules qui ont préalablement été certifiés.

L'élément peut par ailleurs être configuré pour exécuter au moins un deuxième module logiciel permettant de créer des conditions de pilotage à partir du comportement matériel modélisé par le premier module logiciel.

Le deuxième module logiciel peut ne pas être exécuté par la machine virtuelle.

Plusieurs machines virtuelles peuvent être prévues, par exemple pour que chacune exécute des premiers modules propres à une partie respective du véhicule. Les différentes machines virtuelles peuvent ainsi provenir de différents constructeurs des parties respectives du véhicule.

L'élément de simulateur a donc une structure permettant le développement d'un simulateur d'entraînement au pilotage d'un véhicule qui peut réutiliser des modules logiciels déjà crées par le concepteur du véhicule sans que ce concepteur n'ait à divulguer toutes les caractéristiques et les secrets de fabrique de son véhicule.

Par ailleurs, la certification d'un simulateur comportant un élément tel que décrit est simplifié si par exemple, les premiers modules émanant du constructeur sont déjà certifiés, par exemple avec la machine virtuelle. En effet, selon un tel exemple, seuls les deuxièmes modules développés par le concepteur du simulateur restent à certifier. En outre, cette certification ne nécessite pas la divulgation par le constructeur du véhicule de ses secrets de fabrique.

L'élément de simulateur peut ainsi prendre la forme d'une structure logicielle particulière qui permet de réutiliser des modules logiciels provenant de la phase de conception du véhicule et par ailleurs, de séparer les modules propres à la simulation et ceux provenant de la phase de conception du véhicule.

Cette structure peut être mise en oeuvre dans un support d'enregistrement tel qu'une mémoire d'un simulateur, ou sur un autre type de support de stockage de données sur lequel est enregistré une structure de données définie par l'élément.

L'élément de simulateur peut aussi être mis en oeuvre par une unité de commande, ou un ordinateur de commande d'un simulateur.

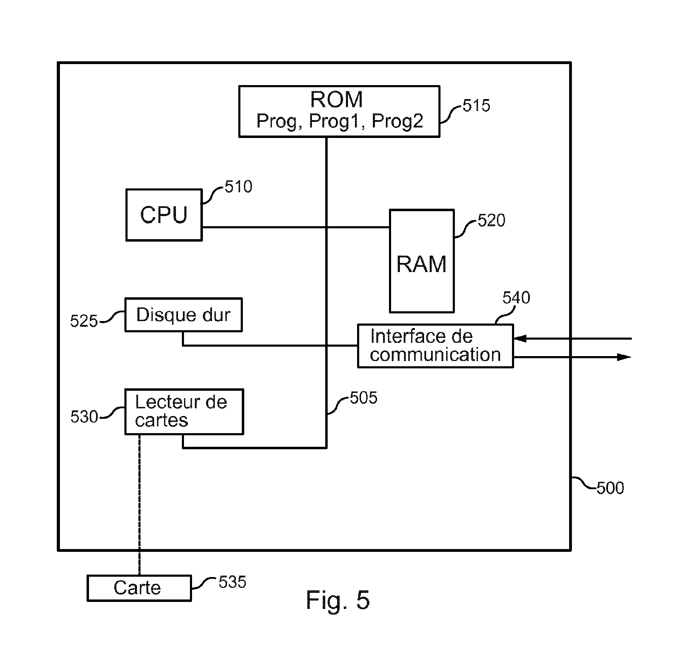

Un dispositif adapté à mettre en oeuvre l'invention ou une partie de l'invention est illustré sur la figure 5. Le dispositif représenté est de préférence un dispositif standard, par exemple un ordinateur ou un serveur. Il est adapté à mettre en oeuvre au moins une partie de l'algorithme de développement d'un simulateur d'entraînements illustré sur la figure 4 ainsi qu'au moins une partie du simulateur d'entraînements.

Le dispositif 500 comporte ici un bus interne de communication 505 auquel sont reliés :
- une unité centrale de traitement ou microprocesseur 510 (CPU, sigle de *Central Processing Unit* en terminologie anglo-saxonne) ;
- une mémoire morte 515 (ROM, acronyme de *Read Only Memory* en terminologie anglo-saxonne) pouvant comporter les programmes nécessaires à la mise en oeuvre de l'invention ;
- une mémoire vive ou mémoire cache 520 (RAM, acronyme de *Random Access Memory* en terminologie anglo-saxonne) comportant des registres adaptés à enregistrer des variables et paramètres créés et modifiés au cours de l'exécution des programmes précités ;
- une interface de communication 540 adaptée à transmettre et à recevoir des données vers et depuis un réseau de communication, par exemple un réseau de type commuté.

Le dispositif 500 dispose également, de préférence, des éléments suivants :
- un disque dur 525 pouvant comporter les programmes précités et des données traitées ou à traiter selon l'invention ; et
- un lecteur de cartes mémoires 530 adapté à recevoir une carte mémoire 535 et à y lire ou à y écrire des données traitées ou à traiter selon l'invention.

Le bus interne de communication permet la communication et l'interopérabilité entre les différents éléments inclus dans le dispositif 500 ou reliés à lui. La représentation du bus interne n'est pas limitative et, notamment, le microprocesseur est susceptible de communiquer des instructions à tout élément du dispositif 500 directement ou par l'intermédiaire d'un autre élément du dispositif 500.

Le code exécutable de chaque programme permettant au dispositif programmable de mettre en oeuvre les processus selon l'invention, peut être stocké, par exemple, dans le disque dur 525 ou en mémoire morte 515.

Selon une variante, la carte mémoire 535 peut contenir des données, notamment une table de correspondance entre les événements détectés et les commandes pouvant être sollicitées, ainsi que le code exécutable des programmes précités qui, une fois lu par le dispositif 500, est stocké dans le disque dur 525.

Selon une autre variante, le code exécutable des programmes pourra être reçu, au moins partiellement, par l'intermédiaire de la première interface de communication 540, pour être stocké de façon identique à celle décrite précédemment.

De manière plus générale, le ou les programmes pourront être chargés dans un des moyens de stockage du dispositif 500 avant d'être exécutés.

Le microprocesseur 510 va commander et diriger l'exécution des instructions ou portions de code logiciel du ou des programmes selon l'invention, instructions qui sont stockées dans le disque dur 525 ou dans la mémoire morte 515 ou bien dans les autres éléments de stockage précités. Lors de la mise sous tension, le ou les programmes qui sont stockés dans une mémoire non volatile, par exemple le disque dur 525 ou la mémoire morte 515, sont transférés dans la mémoire vive 520 qui contient alors le code exécutable du ou des programmes selon l'invention, ainsi que des registres pour mémoriser les variables et paramètres nécessaires à la mise en oeuvre de l'invention.

L'appareil de communication comportant le dispositif selon l'invention peut également être un appareil programmé. Cet appareil contient alors le code du ou des programmes informatiques par exemple figé dans un circuit intégré à application spécifique, aussi appelé ASIC (acronyme d'*Application-Specific Integrated Circuit* en terminologie anglo-saxonne).

Naturellement, pour satisfaire des besoins spécifiques, une personne compétente dans le domaine de l'invention pourra appliquer des modifications dans la description précédente. En particulier, le procédé selon l'invention peut être appliqué à la simulation d'autres types de véhicules, par exemple à la simulation d'automobiles et de navires.

## Revendications

1. Procédé pour développer et qualifier au moins une partie de la composante logicielle d'un simulateur d'entraînements au pilotage d'un véhicule, ce procédé étant **caractérisé en ce qu'**il comprend les étapes suivantes,
- intégration (400) d'au moins un module logiciel (215) développé pour un simulateur d'études, modélisant le comportement d'au moins une partie dudit véhicule, avec une application logicielle de virtualisation (330) permettant l'exécution dudit au moins un module logiciel dans un environnement distinct de l'environnement d'exécution pour lequel ledit au moins un module a été développé, l'intégration dudit au moins un module logiciel avec ladite application logicielle de virtualisation formant une machine virtuelle (315) ; et,
- certification (405) de ladite machine virtuelle.

2. Procédé selon la revendication précédente selon lequel ledit au moins un module logiciel comprend une modélisation du comportement dynamique dudit véhicule.

3. Procédé pour développer et qualifier au moins une partie de la composante logicielle d'un simulateur d'entraînements au pilotage d'un véhicule, ce procédé étant **caractérisé en ce qu'**il comprend les étapes suivantes,
- réception d'au moins une machine virtuelle certifiée formée selon la revendication 1 ou la revendication 2, ledit au moins un module logiciel de ladite machine virtuelle étant appelé premier module logiciel ;
- développement (425, 430) d'au moins un second module logiciel (340) dudit simulateur d'entraînements, distinct dudit premier module logiciel ;
- intégration (435) de ladite au moins une machine virtuelle et dudit au moins un second module logiciel ; et,
- qualification (440) de ladite au moins une partie de la composante logicielle dudit simulateur d'entraînements.

4. Procédé selon la revendication précédente comprenant en outre une étape de réception de spécifications, ledit au moins un second module logiciel étant développé selon lesdites spécifications reçues.

5. Procédé selon la revendication précédente selon lequel ledit au moins un second module logiciel est une modélisation d'au moins une partie dudit véhicule.

6. Programme d'ordinateur comprenant des instructions adaptées à la mise en oeuvre de chacune des étapes du procédé selon l'une quelconque des revendications précédentes lorsque ledit programme est exécuté sur un ordinateur.

7. Dispositif comprenant des moyens adaptés à la mise en oeuvre de chacune des étapes du procédé selon l'une quelconque des revendications 1 à 5.

8. Dispositif pour simulateur d'entraînements au pilotage d'un véhicule, ce dispositif étant caractérisé en qu'il comprend les moyens suivants,
- moyens de gestion logique adaptés à fournir un environnement d'exécution pour des applications logicielles ;
- premiers moyens (315) logiciels de modélisation du comportement d'au moins une première partie dudit véhicule, lesdits premiers moyens de modélisation comprenant au moins une machine virtuelle comprenant elle-même au moins un premier module logiciel pour modéliser ledit comportement de ladite au moins une première partie dudit véhicule, l'environnement d'exécution desdits premiers moyens logiciels de modélisation correspondant audit environnement d'exécution pour des applications logicielles et l'environnement d'exécution dudit au moins un module logiciel étant différent dudit environnement d'exécution pour des applications logicielles ;
- seconds moyens (340) logiciels comprenant au moins un second module logiciel adapté à former une interface entre ledit simulateur d'entraînements et un utilisateur ou à modéliser le comportement d'au moins une seconde partie dudit véhicule, l'environnement d'exécution dudit au moins un second module logiciel correspondant audit environnement d'exécution pour des applications logicielles.

9. Dispositif selon la revendication précédente selon lequel lesdits moyens logiciels de modélisation comprennent des moyens logiciels de modélisation du comportement dynamique dudit véhicule.

10. Dispositif selon la revendication 8 ou la revendication 9 comprenant en outre des moyens de calcul et de mémorisation adaptés à mettre en oeuvre lesdits moyens de gestion logique.

11. Elément de simulateur d'entraînement au pilotage d'un véhicule, comportant au moins un premier module logiciel de modélisation d'un comportement matériel d'au moins une partie dudit véhicule et une machine virtuelle pour exécuter ledit au moins un premier module, ledit élément étant par ailleurs configuré pour exécuter au moins un deuxième module logiciel permettant de créer des conditions de pilotage à partir du comportement matériel modélisé par ledit au moins un premier module logiciel.

12. Elément selon la revendication 11, dans lequel ledit au moins un premier module logiciel est de l'un des types de modules de modélisation suivants : module de modélisation du comportement dynamique du véhicule, module de modélisation d'un système hydraulique du véhicule et module de modélisation de commandes du véhicule.

13. Elément selon la revendication 11, dans lequel ledit au moins un deuxième module logiciel n'est pas exécuté par la machine virtuelle.

14. Elément selon la revendication 11, comportant une pluralité de machines virtuelles.

15. Elément selon la revendication 14, dans lequel chaque machine virtuelle exécute des premiers modules propres à une partie respective du véhicule.
